# FASCICULE DE BREVET EUROPEEN

(11) **EP 4 520 415 B1**
(45) Date de publication et mention de la délivrance du brevet: **22.10.2025**
(21) Numéro de dépôt: 24191200.5
(22) Date de dépôt: 26.07.2024
(51) Int. Cl.: B01D 3/00, B01D 3/20

(54) **DISTRIBUTEUR DE LIQUIDE**
FLÜSSIGKEITSVERTEILER
LIQUID DISTRIBUTOR

(30) Priorité: 23.08.2023 FR 2308860
(43) Date de publication de la demande: 12.03.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: WATTIAU, Mikael, 78350 Les Loges en Josas (FR)
(74) Mandataire: Air Liquide

(56) Documents cités:
- EP-A1- 2 653 203
- US-A- 5 645 770
- US-A- 5 752 538

## Description

La présente invention concerne le domaine des équipements de mise en contact de fluides. Les colonnes ou tours de mise en contact de gaz/liquide utilisent parfois des garnissages pour améliorer les échanges thermiques et massique entre un liquide et un gaz. Ces colonnes sont couramment utilisées pour des applications de transfert thermiques, de distillation, d'absorption ou de strippage. Lorsque l'on utilise des garnissages, on utilise également des distributeurs dont la fonction principale est de répartir de manière uniforme le liquide sur le garnissage afin d'utiliser au mieux la surface de contact développée par le garnissage comme support du liquide, tout en laissant passer le gaz à travers des passages gaz, appelés aussi cheminées. Les distributeurs gravitaires sont de loin les plus utilisés.

On utilise donc des distributeurs au niveau des entrées de liquide mais ils sont également utilisés au bout d'une certaine hauteur de tronçon à partir de laquelle la distribution n'est plus considérée comme suffisamment uniforme pour satisfaire un bon niveau d'échange. On collecte alors le liquide à l'aide d'un équipement appelé collecteur qui alimente ensuite un distributeur. Lorsque pour gagner de la hauteur on intègre le collecteur et le distributeur, on appelle l'équipement un redistributeur. Un redistributeur permet de répartir de nouveau les débits liquides de manière uniforme. Cependant ils permettent aussi dans une certaine mesure d'homogénéiser horizontalement la composition et la température du liquide. Cette fonction est parfois cruciale pour un bon fonctionnement de la colonne. C'est le cas en particulier des distillations difficiles où les composants ont des températures d'ébullition très proches, ou encore lorsque l'on souhaite obtenir des puretés très élevées d'un côté ou de l'autre du tronçon de distillation. Dans ces situations, une maldistribution de la composition a un impact significatif sur les performances de la colonne.

**Il** n'est en général pas nécessaire de mélanger tout le liquide de la colonne en un point. En ne mélangeant qu'une fraction du liquide, on peut obtenir une correction quasi complète. La difficulté réside dans le mélange sur de longue distance horizontale et idéalement dans les deux directions du plan dans une hauteur réduite.

De plus, on cherche à limiter les vitesses horizontales au niveau des perforations des distributeurs. En effet, des vitesses horizontales trop importantes sont susceptibles de générer des disparités de débits dans chaque perforation.

### État de l'art

Il existe des dispositifs pour favoriser le mélange du liquide et donc son homogénéisation horizontale. En général un collecteur et un distributeur séparés sont mieux à même de mélanger. En effet dans le cas de collecteur, on conduit généralement l'ensemble du débit liquide dans un tuyau ou un petit nombre de tuyaux. Cependant les colonnes sensibles à la maldistribution sont souvent celles qui nécessitent beaucoup de surface d'échange et où la compacité verticale devient un enjeu important.

Pour assurer une homogénéité des débits, il faut avoir une même hauteur hydrostatique au-dessus de chaque perforation. Pour cela, la solution la plus robuste est d'avoir une continuité hydraulique de la garde liquide, via un canal qui met en commun les différentes zones de distribution. Ce canal traverse en général le centre du distributeur ou occupe sa périphérie sur toute sa circonférence.

Pour favoriser l'homogénéisation de la composition par rapport aux redistributeurs standards, des systèmes de rampes et de chicanes sont parfois conçus pour mélanger le liquide dans les redistributeurs.

Dans le cas de distributeur avec des cheminées à section rectangulaires, le mélange dans la direction principale des cheminées est plus aisé à favoriser que dans la direction transverse. Il est parfois d'usage d'alterner l'orientation des distributeurs pour mélanger dans les deux directions du plan pour deux tronçons garnis successifs. Cependant cet usage introduit une contrainte de conception architecturale notamment pour les entrées et sorties de gaz ou de liquide.

Les redistributeurs avec une fonction de mélange sont parfois réalisé avec une couronne extérieure pour collecter le liquide qui s'est accumulé en paroi et des plaquettes qui conduisent une fraction du liquide vers le centre.

Plus récemment, un redistributeur mélangeur a été conçu de telle sorte qu'une fraction du liquide collecté de chaque côté d'une colonne soit conduit à l'autre extrémité de la colonne dans la direction transverse aux cheminées. Un tel dispositif permet d'homogénéiser la composition dans un redistributeur compact. Cependant il ne peut directement supporter les garnissages du tronçon supérieur. Il faut lui adjoindre des traverses supplémentaires. De plus, il est plus complexe à concevoir avec de nombreux déversoirs à dimensionner et un canal périphérique supérieur de forme complexe.

### But de l'invention

L'invention décrite dans ces lignes vise à un dispositif simple pour distribuer le reflux liquide d'un tronçon de colonne de contact gaz-liquide avec une bonne homogénéité de débits, et un mélange de la composition amélioré par rapport à l'état de l'art sans impact sur l'encombrement.

### Exposé et avantages de l'invention

Par rapport à un redistributeur simple avec une homogénéisation sommaire tel que décrit dans Jafari, S. et al. (2017). « CFD study of mixing performance of redistribution systems for packed columns », des plaquettes permettent un mélange de la composition dans le sens des goulottes et le fait d'obturer une extrémité de la plaquette pour encourager l'écoulement de liquide par l'autre extrémité et éventuellement de les orienter vers le canal périphérique en alternant l'orientation ou favorise également un mélange des compositions sur typiquement trois goulottes dans le sens transverse, en conservant la compacité par rapport aux solutions où le collecteur et le distributeur sont séparés, et avec une géométrie simple à fabriquer (nombre, complexité des pièces et des assemblages).

La répartition du liquide sur trois goulottes dans le sens transverse est avantageuse par rapport à un redistributeur tel que décrit dans US5752538 et US 5132055.

Par ailleurs, par conception, les écoulements de liquide en bas des plaquettes sont moins tourmentés que ceux obtenus aux goulots formés par les chicanes. En effet, le liquide n'a qu'une direction principale d'écoulement et un plus vaste espace de déversement incluant une portion du canal périphérique et une partie de la goulotte.

Bien que le mélange transverse est inférieur à celui décrit dans US11426676, le distributeur de la présente invention est moins complexe et inclut un support des tronçons de garnissages sans adjonction de traverses.

Par ailleurs, les plaquettes participent à la rigidité structurelle du distributeur en solidarisant davantage les cheminées gaz.

Selon un objet de l'invention, il est prévu un distributeur gravitaire de liquide comprenant :
- une plaque inférieure munie d'orifices par lesquels un liquide quitte le distributeur pour irriguer un élément inférieur, tel qu'un tronçon de garnissage inférieur,
- des cheminées parallélépipédiques parallèles dédiées au passage du gaz ascendant, délimitant ainsi des goulottes de liquide au-dessus de la plaque inférieure, ces cheminées étant munies de moyens d'obturation sur la partie supérieure permettant à la fois de dévier le liquide, par exemple descendant d'un tronçon de garnissage au-dessus du distributeur, et de préférence de supporter mécaniquement ce tronçon,
- les cheminées sont reparties sur toute une partie centrale à section circulaire de la plaque inférieure, dégageant un canal périphérique sur le périmètre de la plaque inférieure relié fluidiquement aux goulottes ,
- une pluralité de plaquettes capables de guider le liquide collecté au-dessus des goulottes vers le canal périphérique, chaque plaquette ayant un forme rectangulaire allongé avec deux extrémités, dans lequel :
   ∘ il y a une seule plaquette par goulotte, chaque plaquette étant obturée à une seule extrémité et éventuellement inclinée de telle sorte qu'au moins la majorité du liquide collecté s'écoule vers le canal périphérique,
   ∘ les plaquettes sont orientées à un angle aigu ou nul à l'horizontale et
   ∘ l'extrémité obturée des plaquettes étant alternée en passant d'une goulotte à une autre.

Selon d'autres aspects facultatifs :
- au moins une des plaquettes couvre au plus trois quarts de la surface de la goulotte.
- le distributeur comprend un brise-jet à la sortie d'au moins une plaquette et au-dessus de la plaque perforé pour limiter les perturbations du niveau par la chute du liquide pour les faibles hauteurs de liquide.
- certaines plaquettes se trouvent entre deux cheminées de gaz adjacentes et ont une longueur inférieure ou égale à celle d'au moins une des deux cheminées de gaz adjacentes.
- chaque plaquette a un fond plat, le fond plat étant orienté à un angle entre 0 et 30° à la surface de la plaque, voire entre 0° et 10° à la surface de la plaque.
- les plaquettes sont orientées à un angle aigu à l'horizontale et sont alternativement orientées vers un côté ou l'autre de la plaque en passant d'une goulotte à la prochaine.
- certaines, voire la plupart des plaquettes sont positionnées de sorte que le liquide sorte des plaquettes à une extrémité des deux cheminées de gaz adjacentes, afin de déverser le liquide directement dans le canal périphérique.
- chaque plaquette couvre au moins deux tiers de la surface de la goulotte et éventuellement toute la surface de la goulotte.

Selon l'invention, il est prévu une colonne de mise en contact de fluide comprenant au moins un distributeur tel que décrit ci-dessus, des moyens pour déverser du liquide au-dessus du distributeur et un tronçon de garnissages structurés en dessous du distributeur.

Selon un autre objet de l'invention, il est prévu un procédé de mise en contact d'un gaz et d'un liquide dans une colonne selon la revendication 9 ou 10.

La colonne peut comprendre un tronçon de garnissages structurés au-dessus du distributeur supporté par les moyens d'obturation.

Description de modes de réalisation

L'invention sera décrite de manière plus détaillée en se référant aux Figures.

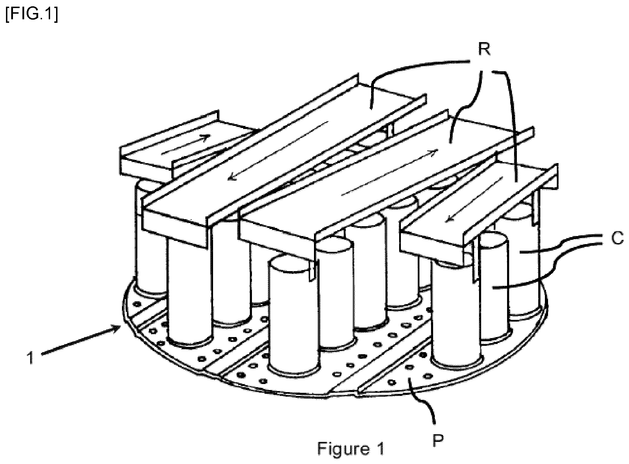

[FIG.1] représente un redistributeur 1 selon US 5645770 avec des plaquettes R qui font également office de moyen d'obturation pour les cheminées gaz C posées sur une plaque P. Cette solution est relativement simple mais n'inclut par la fonction de support pour le tronçon supérieur. Elle présente d'ailleurs une faible rigidité structurelle sans l'apport de cheminées parallélépipédiques qui traversent l'ensemble.

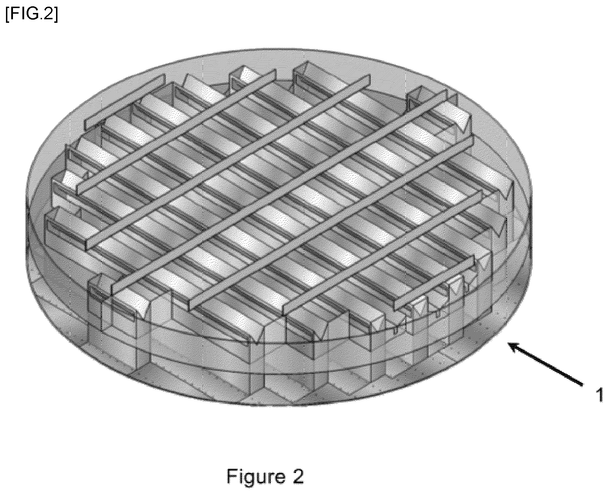

[FIG.2] représente un redistributeur 1 selon US11426676. La collecte d'une fraction du liquide via les moyens d'obturation des cheminées gaz et le canal périphérique supérieur segmenté permet un mélange fin de la composition liquide. En revanche, il est assez complexe et on doit ajouter des traverses à assembler (généralement par soudage) à l'ensemble pour supporter le tronçon supérieur.
[FIG.3], [FIG.4] et [FIG.5] sont des vues de dessus d'un distributeur selon l'invention
[FIG.6] et [FIG.7] représentent des modes de réalisation de l'invention vue de côté.

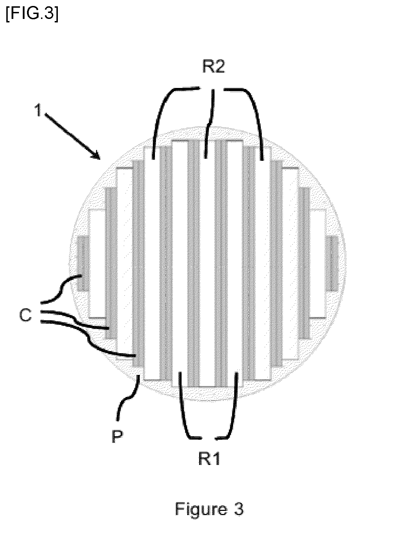

Figure 3 montre un distributeur gravitaire 1A de liquide comprenant :
- une plaque inférieure P munie d'orifices par lesquels le liquide quitte le distributeur pour irriguer un tronçon de garnissage inférieur,
- neuf cheminées parallélépipédiques parallèles C dédiées au passage du gaz ascendant, délimitant ainsi des goulottes de liquide au-dessus de la plaque inférieure, ces cheminées C étant munies de moyens d'obturation sur la partie supérieure permettant à la fois de dévier le liquide descendant d'un tronçon de garnissage au-dessus du distributeur et de supporter mécaniquement ce tronçon, Les cheminées C sont reparties sur toute la partie centrale de la plaque inférieure P, dégageant un canal périphérique P sur le périmètre de la plaque inférieure mettant en continuité une pluralité de plaquettes R qui guident le liquide collecté au-dessus des goulottes vers le canal périphérique P.

Il y a une seule plaquette R par goulotte, la plaquette étant inclinée (comme illustré) et/ou obturée à une seule extrémité de telle sorte que la majorité du liquide collecté s'écoule vers le canal périphérique.

Les extrémités obturées alternent d'une goulotte à une autre, de sorte que si une plaquette dans une goulotte a son extrémité à gauche obturée, les plaquettes des goulottes adjacentes auront leur extrémité à droite obturée et vice versa. Ainsi les plaquettes déversent le liquide de manière équilibrée sur le canal périphérique.

La plaquette peut être horizontale ou se trouver à un angle aigu inférieur à 30°C, voire à 10°C à l'horizontale, la plaque P étant orientée à l'horizontale.

Les plaquettes R1, R2 sont orientées dans cet exemple à un angle aigu à l'horizontale et sont alternativement orientées vers un côté ou l'autre de la plaque en passant d'une goulotte à la prochaine. Les plaquettes R1, R1 ont donc des pentes alternées. Ainsi les quatre plaquettes R1 sont orientées avec leur extrémité la plus basse vers un bord de la plaque et les cinq plaquettes R2 sont orientées avec leur extrémité la plus basse vers le bord en face.

Une plaquette unique R1, R1 couvre au maximum toute la surface de la goulotte mais de préférence sur une fraction seulement, par exemple au moins les deux-tiers de la surface de la goulotte

Optionnellement, on peut disposer des brise-jets à l'extrémité où le liquide sort des plaquettes et au-dessus de la plaque perforée pour limiter les perturbations du niveau par la chute du liquide pour les faibles hauteurs de liquide.

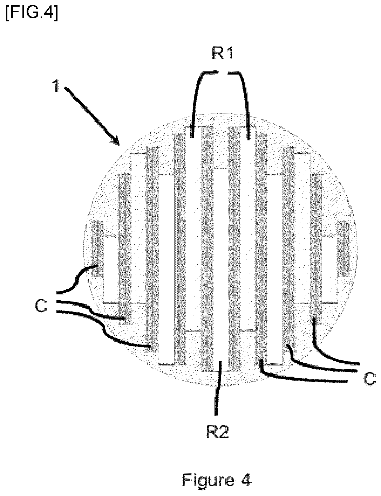

Dans la variante de la figure 3 les plaquettes ont une longueur plus courte qu'une cheminée adjacente et plus longue que l'autre cheminée adjacente, sauf la plaquette centrale qui a la même longueur que les deux cheminées adjacentes. Dans la variante de la figure 4, les trois plaquettes centrales sont plus courtes que les cheminées adjacentes.

Les plaquettes sont de préférence en contact avec les parois verticales des cheminées.

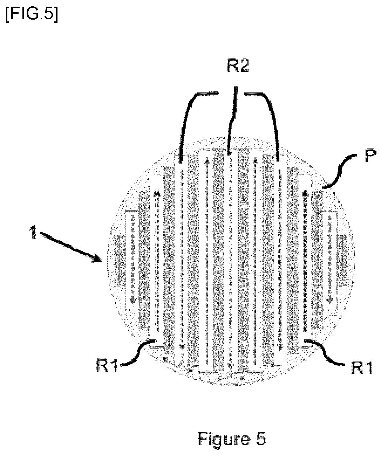

Les flèches pointillées de la figure 5 décrivent le trajet du liquide quittant les plaquettes et se répartissant via le canal périphérique dans trois goulottes connexes de la figure 3.

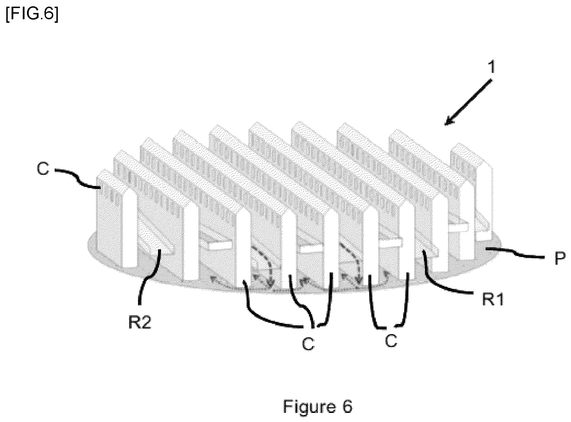

Dans la figure 6 on voit que l'extrémité haute de chaque plaquette selon la figure 4 est obstruée pour éviter que le liquide se déverse du mauvais côté. Le haut de la cheminée C est percé de multiples ouvertures pour laisser passer du gaz montant dans la colonne.

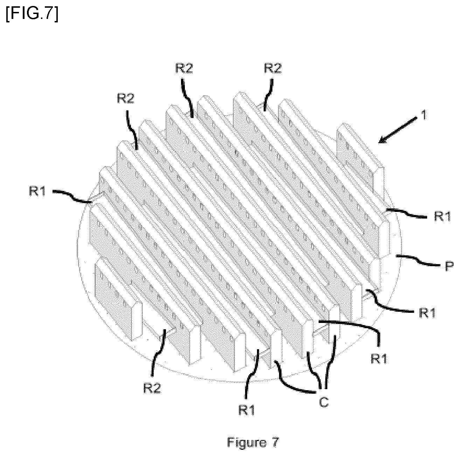

Dans la figure 7, on voit de côté la version de la figure 5.

## Revendications

1. Un distributeur (1) gravitaire de liquide comprenant :
• une plaque inférieure (P) munie d'orifices par lesquels un liquide quitte le distributeur pour irriguer un élément inférieur, tel qu'un tronçon de garnissage inférieur,
• des cheminées (C) parallélépipédiques parallèles dédiées au passage du gaz ascendant, délimitant ainsi des goulottes de liquide au-dessus de la plaque inférieure, ces cheminées étant munies de moyens d'obturation sur la partie supérieure permettant à la fois de dévier le liquide, par exemple descendant d'un tronçon de garnissage au-dessus du distributeur, et de préférence de supporter mécaniquement ce tronçon,
• les cheminées sont reparties sur toute une partie centrale à section circulaire de la plaque inférieure, dégageant un canal périphérique sur le périmètre de la plaque inférieure relié fluidiquement aux goulottes,
• une pluralité de plaquettes (R, R1, R2) capables de guider le liquide collecté au-dessus des goulottes vers le canal périphérique, chaque plaquette ayant un forme rectangulaire allongé avec deux extrémités, dans lequel :
∘ il y a une seule plaquette par goulotte, chaque plaquette étant obturée à une seule extrémité et éventuellement inclinée de telle sorte qu'au moins la majorité du liquide collecté s'écoule vers le canal périphérique,
∘ les plaquettes sont orientées à un angle aigu ou nul à l'horizontale et
∘ l'extrémité obturée des plaquettes étant alternée en passant d'une goulotte à une autre.

2. Distributeur selon la revendication 1 dans lequel au moins une des plaquettes (R, R1, R2) couvre au plus trois quarts de la surface de la goulotte.

3. Distributeur selon la revendication 1 ou 2 comprenant un brise-jet à la sortie d'au moins une plaquette (R, R1, R2) et au-dessus de la plaque (P) perforée pour limiter les perturbations du niveau par la chute du liquide pour les faibles hauteurs de liquide.

4. Distributeur selon l'une des revendications 1 à 3 dans lequel certaines plaquettes (R, R1, R2) se trouvent entre deux cheminées (C) de gaz adjacentes et ont une longueur inférieure ou égale à celle d'au moins une des deux cheminées de gaz adjacentes.

5. Distributeur selon l'une des revendications 1 à 4 dans lequel chaque plaquette (R, R1, R2) a un fond plat, le fond plat étant orienté à un angle entre 0 et 30° à la surface de la plaque (P), voire entre 0° et 10° à la surface de la plaque.

6. Distributeur selon la revendication 5 dans lequel les plaquettes (R, R1, R2) sont orientées à un angle aigu à l'horizontale et sont alternativement orientées vers un côté ou l'autre de la plaque (P) en passant d'une goulotte à la prochaine.

7. Distributeur selon l'une des revendications précédentes dans lequel certaines, voire la plupart des plaquettes sont positionnées de sorte que le liquide sorte des plaquettes à une extrémité des deux cheminées de gaz adjacentes, afin de déverser le liquide directement dans le canal périphérique.

8. Distributeur selon l'une des revendications précédentes dans lequel chaque plaquette (R, R1, R2) couvre au moins deux tiers de la surface de la goulotte et éventuellement toute la surface de la goulotte.

9. Colonne de mise en contact de fluide comprenant au moins un distributeur (1) selon une des revendications 1 à 8, des moyens pour déverser du liquide au-dessus du distributeur et un tronçon de garnissages structurés en dessous du distributeur.

10. Colonne selon la revendication 9 comprenant un tronçon de garnissages structurés au-dessus du distributeur (1) supporté par les moyens d'obturation.

11. Procédé de mise en contact d'un gaz et d'un liquide dans une colonne selon la revendication 9 ou 10.

## Patentansprüche

1. Schwerkraft-Flüssigkeitsverteiler (1), welcher umfasst:
• eine untere Platte (P), die mit Öffnungen versehen ist, durch die eine Flüssigkeit den Verteiler verlässt, um ein unteres Element wie etwa einen unteren Packungsabschnitt zu berieseln,
• parallele quaderförmige Schächte (C), die für das Durchströmen des aufsteigenden Gases bestimmt sind und so Flüssigkeitsrinnen oberhalb der unteren Platte begrenzen, wobei diese Schächte mit Verschlussmitteln am oberen Teil versehen sind, die es ermöglichen, gleichzeitig die Flüssigkeit abzuleiten, die zum Beispiel von einem Packungsabschnitt oberhalb des Verteilers herabfließt, und vorzugsweise diesen Abschnitt mechanisch zu stützen,
• wobei die Schächte auf einem gesamten mittleren Teil mit kreisförmigem Querschnitt der unteren Platte verteilt sind und dabei einen umlaufenden Kanal am Umfang der unteren Platte freilassen, der mit den Rinnen in Fluidverbindung steht,
• mehrere Plättchen (R, R1, R2), die in der Lage sind, die oberhalb der Rinnen gesammelte Flüssigkeit zu dem umlaufenden Kanal hin zu leiten, wobei jedes Plättchen eine längliche rechteckige Form mit zwei Enden aufweist, wobei:
∘ ein einziges Plättchen pro Rinne vorhanden ist, wobei jedes Plättchen nur an einem Ende verschlossen ist und eventuell so geneigt ist, dass wenigstens der größte Teil der gesammelten Flüssigkeit zu dem umlaufenden Kanal hin fließt,
∘ die Plättchen unter einem spitzen Winkel oder Nullwinkel zur Horizontalen ausgerichtet sind und
∘ die verschlossenen Enden der Plättchen einander von einer Rinne zur nächsten abwechseln.

2. Verteiler nach Anspruch 1, wobei mindestens eines der Plättchen (R, R1, R2) höchstens drei Viertel der Fläche der Rinne bedeckt.

3. Verteiler nach Anspruch 1 oder 2, welcher einen Strahlregler am Auslass mindestens eines Plättchens (R, R1, R2) und oberhalb der perforierten Platte (P) umfasst, um die Störungen des Pegels durch das Herabfallen der Flüssigkeit für die geringen Flüssigkeitshöhen zu begrenzen.

4. Verteiler nach einem der Ansprüche 1 bis 3, wobei sich einige Plättchen (R, R1, R2) zwischen zwei benachbarten Gasschächten (C) befinden und eine Länge aufweisen, die kleiner oder gleich derjenigen wenigstens eines der zwei benachbarten Gasschächte ist.

5. Verteiler nach einem der Ansprüche 1 bis 4, wobei jedes Plättchen (R, R1, R2) einen flachen Boden aufweist, wobei der flache Boden unter einem Winkel zwischen 0 und 30° zur Oberfläche der Platte (P) oder sogar zwischen 0° und 10° zur Oberfläche der Platte ausgerichtet ist.

6. Verteiler nach Anspruch 5, wobei die Plättchen (R, R1, R2) unter einem spitzen Winkel zur Horizontalen ausgerichtet sind und von einer Rinne zur nächsten abwechselnd zur einen oder anderen Seite der Platte (P) hin gerichtet sind.

7. Verteiler nach einem der vorhergehenden Ansprüche, wobei einige oder sogar die meisten Plättchen so positioniert sind, dass die Flüssigkeit von den Plättchen an einem Ende der zwei benachbarten Gasschächte abläuft, um die Flüssigkeit direkt in den umlaufenden Kanal auszugießen.

8. Verteiler nach einem der vorhergehenden Ansprüche, wobei jedes Plättchen (R, R1, R2) mindestens zwei Drittel der Fläche der Rinne und eventuell die gesamte Fläche der Rinne bedeckt.

9. Kolonne zum Inkontaktbringen von Fluid, welche mindestens einen Verteiler (1) nach einem der Ansprüche 1 bis 8, Mittel zum Ausgießen der Flüssigkeit oberhalb des Verteilers und einen Abschnitt von strukturierten Packungen unterhalb des Verteilers umfasst.

10. Kolonne nach Anspruch 9, welche einen Abschnitt von strukturierten Packungen oberhalb des Verteilers (1) umfasst, der von den Verschlussmitteln gestützt wird.

11. Verfahren zum Inkontaktbringen eines Gases und einer Flüssigkeit in einer Kolonne nach Anspruch 9 oder 10.

## Claims

1. Gravity liquid distributor (1) comprising:
• a lower plate (P) provided with orifices via which a liquid leaves the distributor in order to irrigate a lower element, such as a lower packing section,
• parallel parallelepipedal chimneys (C) dedicated to the passage of the ascending gas, thus delimiting troughs for liquid above the lower plate, these chimneys being provided with closure means on the upper portion, making it possible both to deflect the liquid, which is for example descending from a packing section above the distributor, and preferably to mechanically support this section,
• the chimneys are distributed over an entire central portion with a circular cross section of the lower plate, which frees up a peripheral channel, which is fluidically connected to the troughs, over the perimeter of the lower plate,
• a plurality of hats (R, R1, R2) that are able to guide the liquid collected above the troughs towards the peripheral channel, each hat having an elongate rectangular form with two ends, wherein:
∘ there is just one hat per trough, each hat being closed off at just one end and optionally inclined such that at least the majority of the liquid collected flows towards the peripheral channel,
∘ the hats are oriented at an acute or zero angle with respect to the horizontal, and
∘ the end of the hats that is closed off alternates from one trough to another.

2. Distributor according to Claim 1, wherein at least one of the hats (R, R1, R2) covers at most three-quarters of the surface of the trough.

3. Distributor according to Claim 1 or 2 comprising a baffle at the outlet of at least one hat (R, R1, R2) and above the perforated plate (P) in order to limit disturbances of the level due to falling liquid for low liquid heights.

4. Distributor according to one of Claims 1 to 3, wherein some of the hats (R, R1, R2) are located between two adjacent gas chimneys (C) and have a length that is smaller than or equal to that of at least one of the two adjacent gas chimneys.

5. Distributor according to one of Claims 1 to 4, wherein each hat (R, R1, R2) has a flat bottom, the flat bottom being oriented at an angle of between 0 and 30° with respect to the surface of the plate (P), or even of between 0° and 10° with respect to the surface of the plate.

6. Distributor according to Claim 5, wherein the hats (R, R1, R2) are oriented at an acute angle with respect to the horizontal and are alternately oriented towards one side or the other of the plate (P) from one trough to the next.

7. Distributor according to one of the preceding claims, wherein some of, or even most of, the hats are positioned such that the liquid exits the hats at one end of the two adjacent gas chimneys, so as to discharge the liquid directly into the peripheral channel.

8. Distributor according to one of the preceding claims, wherein each hat (R, R1, R2) covers at least two-thirds of the surface of the trough and optionally the entire surface of the trough.

9. Fluid-contacting column comprising at least one distributor (1) according to one of Claims 1 to 8, means for discharging liquid above the distributor and a structured packing section below the distributor.

10. Column according to Claim 9 comprising a structured packing section above the distributor (1), said section being supported by the closure means.

11. Method for contacting a gas and a liquid in a column according to Claim 9 or 10.
